Europäisches Patentamt

European Patent Office

Office européen des brevets

(19)

(11) Veröffentlichungsnummer : **0 201 708**
**B1**

(12) **EUROPÄISCHE PATENTSCHRIFT**

(45) Veröffentlichungstag der Patentschrift :
23.11.89

(21) Anmeldenummer : 86104573.0

(22) Anmeldetag : 03.04.86

(51) Int. Cl.⁴ : **C 08 L 27/06**, C 08 L 57/00,
C 08 K 5/00, C 08 K 5/15 //
(C08L27/06, 33:00)

(54) Kunststoffmassen für die Herstellung von Tiefziehfolien.

(30) Priorität : 08.05.85 DE 3516519

(43) Veröffentlichungstag der Anmeldung :
20.11.86 Patentblatt 86/47

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
DE--A-- 3 331 220

(73) Patentinhaber : J. H. Benecke AG
Beneckeallee 40
D-3000 Hannover 1 (DE)

(72) Erfinder : Wildenau, Artur, Dr.
Isernhagener Strasse 28
D-3004 Isernhagen 1 (DE)

(74) Vertreter : Leine, Sigurd, Dipl.-Ing. et al
LEINE & KÖNIG Patentanwälte Burckhardtstrasse 1
D-3000 Hannover 1 (DE)

EP 0 201 708 B1

## Beschreibung

Die Erfindung betrifft Kunststoffmassen für die Herstellung von Tiefziehfolien.

Es sind eine Reihe von Tiefziehfolien auf der Basis von Polymermischungen bekannt, die Polyvinylchlorid (PVC) verwenden, beispielsweise durch die DE-A-3 331 220. Die Eigenschaften dieser Folien sind aber nicht zufriedenstellend. Der Widerstand gegen Scherbeanspruchung ist verbesserungsbedürftig. Außerdem neigen diese Folien häufig zu dem sogenannten « Pelzen ».

Kunststoffmassen auf der Basis von Ethylen-Vinylacetat (EVA) oder Polyethylen (PE) neigen zur Stippenbildung. Ethylen-Vinylacetat läßt sich nicht in eine rieselfähige Form bringen.

Die Aufgabe der vorliegenden Erfindung besteht darin, Kunststoffmassen anzugeben, die ohne Schwierigkeit zu Folien ziehbar sind, deren Eigenschaften insbesondere hinsichtlich Festigkeit und Alterungsbeständigkeit verbessert sind.

Die erfindungsgemäßen Kunststoffmassen zur Lösung der der Erfindung zugrundeliegenden Aufgabe weisen folgende Zusammensetzung auf :

a) 55- 65 Gewichtsteile Polyvinylchlorid
b) 50- 60 Gewichtsteile thermoplastischer Kautschuk
c)  0- 10 Gewichtsteile Styrol
d)  0- 10 Gewichtsteile Polystyrol-Polyethylenbutylen-Copolymerisat
e)  5- 10 Gewichtsteile monomerer Epoxi-Weichmacher
f)  4- 5 Gewichtsteile Verarbeitungshilfsmittel.

Diese Kunststoffmassen zeichnen sich durch verbesserte Verarbeitbarkeit, erhöhte Festigkeit und verbesserte Alterungsbeständigkeit aus.

Das Polyvinylchlorid und der thermoplastische Kautschuk werden vorzugsweise wie folgt eingesetzt :

a) 35-40 Gewichtsteile S-PVC mit einem K-Wert von ca. 60
b) 40-50 Gewichtsteile einer Mischung aus Acrylat-Kautschuk und PVC
c)  0-15 Gewichtsteile einer Mischung aus Acrylat-Kautschuk und Styrol.

Die Mischungsverhältnisse zwischen Acrylat-Kautschuk und PVC sowie mit Styrol betragen vorzugsweise 1 : 1 sowie zwischen Acrylat-Kautschuk und Styrol 3 : 1 bis 7 : 3.

Die üblicherweise verwendeten Verarbeitungshilfsmittel werden vorzugsweise in folgender Zusammensetzung eingesetzt :

a) 2   Gewichtsteile SnS-Stabilisator
b) 0,3 Gewichtsteile anoxidiertes Polyethylenwachs
c) 1   Gewichtsteil Trishydroxiethylisocianurat
d) 0,3 Gewichtsteile Trisnonylphenylphosphit
e) 1   Gewichtsteil Octadecyl 3-(3,5-4 hydroxiphenylpropionat).

Nachfolgend sollen einige Beispiele von Kunststoffmassen angegeben werden, die zu Folien verarbeitet wurden.

Ein besonderer Vorteil der erfindungsgemäßen Kunststoffmassen besteht darin, daß sie sich in rieselfähige Formen überführen lassen, was mit Ethylen-Vinylacetat (beispielsweise Handelsprodukt Levapren®) nicht möglich ist. Hierdurch wird die Fertigung von Folien erheblich erleichtert.

2

| Zusammensetzung | Kunststoffmassen | | | | |
|---|---|---|---|---|---|
| | 1 | 2 | 3 | 4 | 5 |
| S-PVC mit K-Wert von ca. 60 | 35 | 35 | 40 | 40 | 35 |
| Monumerer Epoxi-Weichmacher | 5 | 10 | 5 | 10 | 5 |
| Acrylat-Kautschuk/PVC (1:1) | 50 | 50 | 40 | 40 | 50 |
| Acrylat-Kautschuk/Styrol | 10 | 5 | 15 | 10 | -- |
| SnS-Stabilisator | 2 | 2 | 2 | 2 | 2 |
| Anoxidiertes Polyethylenwachs | 0,3 | 0,3 | 0,3 | 0,3 | 0,3 |
| Trishydroxiethylisocianurat | 1 | 1 | 1 | 1 | 1 |
| Trisnonylphenylphosphit | 0,3 | 0,3 | 0,3 | 0,3 | 0,3 |
| Octadecyl 3 -(3,5-4 hydroxiphenyl-proprionat) | 1 | 1 | 1 | 1 | 1 |
| Polystyrol-Polyethylenbutylen-Copolymerisat | - | - | - | - | 10 |

*(rechte Randbeschriftung: Gewichtstelle)*

Aus den Kunststoffmassen 1-5 wurden Bänder hergestellt und deren Reißdehnung und Dehnungsreste gemessen im Anlieferungszustand sowie nach einer thermischen Behandlung als auch nach einer Belichtung mit einer Xenonlampe. Die Meßergebnisse sind in der nachfolgenden Tabelle 2 wiedergegeben.

(Siehe Tabelle Seite 4 f.)

EP 0 201 708 B1

| Kunststoff-masse | Reißdehnung (%) Anlieferungs-zustand | Reißdehnung (%) nach 500 h 120° C | | Reißdehnung (%) nach 500 h Xenontest-belichtung | Dehnungsrest (%) nach 500 h 120° C | | Dehnungsrest (%) nach 500 h Xenontest-belichtung |
|---|---|---|---|---|---|---|---|
| | längs | längs Schr.3 | längs Schr.7 | längs | längs Schr.3 | längs Schr.7 | längs |
| 1 | $\bar{x}$ = 170<br>s = 10<br>n = 5 | $\bar{x}$=160 | $\bar{x}$=170 | $\bar{x}$ = 170 | 94 | 100 | 100 |
| 2 | $\bar{x}$ = 180<br>s = 11<br>n = 5 | $\bar{x}$=160 | $\bar{x}$=170 | $\bar{x}$ = 170 | 89 | 94 | 94 |
| 3 | $\bar{x}$ = 160<br>s = 3,9<br>n = 5 | $\bar{x}$=170 | $\bar{x}$=170 | $\bar{x}$ = 160 | 106 | 106 | 100 |
| 4 | $\bar{x}$ = 170<br>s = 5<br>n = 5 | $\bar{x}$=170 | $\bar{x}$=160 | $\bar{x}$ = 170 | 100 | 94 | 100 |
| 5 | $\bar{x}$ = 190<br>s = 9<br>n = 5 | $\bar{x}$=200 | $\bar{x}$=190 | $\bar{x}$ = 170 | 105 | 100 | 89 |

Die erfindungsgemäßen Kunststoffmassen enthalten keine Plastifizierungsmittel auf der Basis von Ethylenvinylacetat oder olefinischen Terpolymerisaten. Die aus den erfindungsgemäßen Kunststoffmassen hergestellten Folien weisen keine Inhomogenitäten und keine Stippen auf.

**Patentansprüche**

1. Kunststoffmassen für die Herstellung von Tiefziehfolien folgender Zusammensetzung :

a) 55- 65 Gewichtsteile Polyvinylchlorid
b) 50- 60 Gewichtsteile thermoplastischer Kautschuk
c)  0- 10 Gewichtsteile Styrol
d)  0- 10 Gewichtsteile Polystyrol-Polyethylenbutylen-Copolymerisat
e)  5- 10 Gewichtsteile monomerer Epoxi-Weichmacher
f)  4-  5 Gewichtsteile Verarbeitungshilfsmittel.

2. Kunststoffmassen nach Anspruch 1, dadurch gekennzeichnet, daß das Polyvinylchlorid (PVC) und der thermoplastische Kautschuk wie folgt eingesetzt werden :

a) 35-40 Gewichtsteile S-PVC mit einem K-Wert von ca. 60
b) 40-50 Gewichtsteile einer Mischung aus Acrylat-Kautschuk und PVC
c)  0-15 Gewichtsteile einer Mischung aus Acrylat-Kautschuk und Styrol.

3. Kunststoffmassen nach Anspruch 2, dadurch gekennzeichnet, daß das Mischungsverhältnis Acrylat-Kautschuk : PVC = 1 : 1 beträgt.
4. Kunststoffmassen nach Anspruch 2, dadurch gekennzeichnet, daß das Mischungsverhältnis Acrylat-Kautschuk : Styrol = 3 : 1 bis 7 : 3 beträgt.
5. Kunststoffmassen nach Anspruch 1, dadurch gekennzeichnet, daß die Verarbeitungsmittel mit folgender Zusammensetzung verwendet werden :

a) 2   Gewichtsteile SnS-Stabilisator
b) 0,3 Gewichtsteile anoxidiertes Polyethylenwachs
c) 1   Gewichtsteil Trishydroxiethylisocianurat
d) 0,3 Gewichtsteile Trisnonylphenylphosphit
e) 1   Gewichtsteil Octadecyl 3-(3,5-4 hydroxiphenylpropionat).

**Claims**

1. Synthetic plastics compositions for the production of deep-drawing foils of the following composition :

a) 55- 65 parts by weight of polyvinyl chloride,
b) 50- 60 parts by weight of thermoplastic rubber,
c)  0- 10 parts by weight of styrene,
d)  0- 10 parts by weight of polystyrene-polyethylene butylene copolymer,
e)  5- 10 parts by weight of monomeric epoxy plasticiser,
f)  4-  5 parts by weight of processing auxiliary.

2. Synthetic plastics compositions according to claim 1, characterised in that the polyvinyl chloride (PVC) and the thermoplastic rubber are introduced as follows :

a) 35- 40 parts by weight of S-PVC with a K-value of about 60,
b) 40- 50 parts by weight of a mixture of acrylate rubber and PVC,
c)  0- 15 parts by weight of a mixture of acrylate rubber and styrene.

3. Synthetic plastics compositions according to claim 2, characterised in that the mixing ratio of acrylate rubber-PVC = 1 : 1.
4. Synthetic plastics compositions according to claim 2, characterised in that the mixing ratio of acrylate rubber : styrene = 3 : 1 to 7 : 3.
5. Synthetic plastics compositions according to claim 1, characterised in that the processing media are used with the following composition :

a) 2   parts by weight of SnS stabiliser
b) 0.3 part by weight of oxidised polyethylene wax

5

c) 1   part by weight of tris-hydroxyethyl isocyanurate
d) 0.3 part by weight of tris-nonyl phenyl phosphite
e) 1   part by weight of 3-octadecyl (3,5-4 hydroxyphenyl propionate).

## Revendications

1. Matières plastiques pour la production de feuilles à emboutir ayant la composition suivante :

a) de 55 à 65 parties en poids de poly(chlorure de vinyle)
b) de 50 à 60 parties en poids de caoutchouc thermoplastique
c) de  0 à 10 parties en poids de styrène
d) de  0 à 10 parties en poids d'un copolymère de polystyrène et de polyéthylènebutylène
e) de  5 à 10 parties en poids d'un plastifiant époxy monomère
f) de  4 à  5 parties en poids d'un adjuvant de transformation.

2. Matières plastiques suivant la revendication 1, caractérisées en ce que le poly(chlorure de vinyle) (PVC) et le caoutchouc thermoplastique sont utilisés de la manière suivante :

a) de 35 à 40 parties en poids de PVC-S ayant une valeur de K de 60 environ
b) de 40 à 50 parties en poids d'un mélange de caoutchouc acrylate et de PVC
c) de  0 à 15 parties en poids d'un mélange de caoutchouc acrylate et de styrène.

3. Matières plastiques suivant la revendication 2, caractérisées en ce que le rapport de mélange du caoutchouc acrylate au PVC est égal à 1 : 1.

4. Matières plastiques suivant la revendication 2, caractérisées en ce que le rapport de mélange du caoutchouc acrylate au styrène est compris entre 3 : 1 et 7 : 3.

5. Matières plastiques suivant la revendication 1, caractérisées en ce que les agents de traitement ayant la composition suivante sont utilisés :

a) 2   parties en poids d'agent stabilisant au SnS
b) 0,3 partie en poids de cire de polyéthylène oxydée
c) 1   partie en poids d'isocyanurate de trishydroxyéthyle
d) 0,3 partie en poids de phosphite de trisnonylphényle
e) 1   partie en poids de 3-(3,5,4 hydroxyphényl) propionate d'octadécyle.